# EUROPÄISCHE PATENTSCHRIFT

(11) **EP 3 811 733 B1**
(45) Veröffentlichungstag und Bekanntmachung des Hinweises auf die Patenterteilung: **20.03.2024**
(21) Anmeldenummer: 19732131.8
(22) Anmeldetag: 24.05.2019
(51) Int. Cl.: H05B 6/12

(54) **INDUKTIONSOFENVORRICHTUNG**
INDUCTION FURNACE DEVICE
ENSEMBLE FOUR À INDUCTION

(30) Priorität: 21.06.2018 ES 201830618
(43) Veröffentlichungstag der Anmeldung: 28.04.2021
(73) Patentinhaber: BSH Hausgeräte GmbH, 81739 München (DE)
(72) Erfinder: ALMOLDA FANDOS, Manuel, 50019 Zaragoza (ES); HERNANDEZ BLASCO, Pablo Jesus, 50019 Zaragoza (ES); JACA EQUIZA, Izaskun, 50008 Zaragoza (ES); LOPE MORATILLA, Ignacio, 50010 Zaragoza (ES); MARTIN GOMEZ, Damaso, 50012 Zaragoza (ES); RIGUAL ITURRIA, Alvaro, 50012 Zaragoza (ES)
(86) Internationale Anmeldenummer: PCT/IB2019/054317
(87) Internationale Veröffentlichungsnummer: WO 2019/243921

(56) Entgegenhaltungen:
- EP-A1- 2 164 298
- WO-A1-2018/116062
- US-A- 4 675 507

## Beschreibung

Die Erfindung betrifft eine Induktionsofenvorrichtung nach dem Oberbegriff des Anspruchs 1 und ein Verfahren zur Herstellung einer Induktionsofenvorrichtung nach dem Oberbegriff des Anspruchs 13.

Aus dem Stand der Technik sind Kochfelder bekannt, welche Heizeinheiten mit Induktionsspulen aufweisen, die an einer Substrateinheit befestigt sind. Die Substrateinheit ist dazu vorgesehen, die Induktionsspule relativ zu einer Kochfeldplatte zu halten und einen Verlauf eines Leiters der Induktionsspule zu definieren. Es sind verschiedene Methoden bekannt, die Induktionsspulen an der Substrateinheit zu befestigen, beispielsweise ist die Verwendung von Klammern, Schrauben, Klappen, Klebstoffen und Plastikprofilen bekannt. Diese bekannten Lösungen sind aber nur bedingt für Betriebstemperaturen von über 500°C geeignet, da das Verwenden spezieller hitzeresistenter Materialien teuer ist und gängige Fixiermethoden nicht für eine thermische Ausdehnung der Induktionsspule ausgelegt sind.

Aus der EP 2 164 298 A1 ist ein elektrischer Induktionsofen bekannt, welcher seitlich an einer Garmuffel des Induktionsofens angebrachte Heizeinheiten aufweist, welche jeweils als ein Schichtsystem aus Induktionsspulen und Isolierschichten ausgebildet sind.

Die Aufgabe der Erfindung besteht insbesondere darin, eine gattungsgemäße Vorrichtung mit verbesserten Eigenschaften hinsichtlich einer Robustheit und Kosteneffizienz bereitzustellen. Die Aufgabe wird erfindungsgemäß durch die Merkmale des Anspruchs 1 und 13 gelöst, während vorteilhafte Ausgestaltungen und Weiterbildungen der Erfindung den Unteransprüchen entnommen werden können.

Die Erfindung geht aus von einer Induktionsofenvorrichtung mit zumindest einer Heizeinheit, welche zumindest eine Induktionsspule mit wenigstens einem elektrischen Leiter, zumindest eine Substrateinheit und zumindest eine Befestigungseinheit mit zumindest einem Befestigungselement aufweist, welche die Induktionsspule an der Substrateinheit befestigt.

In einem Aspekt der Erfindung wird vorgeschlagen, dass die Substrateinheit zumindest eine Durchlassöffnung aufweist, durch welche zumindest das Befestigungselement geführt ist. Hierdurch kann insbesondere eine einfache und kosteneffiziente Befestigung der Induktionsspule erreicht werden. Vorteilhaft kann eine Befestigung der Induktionsspule an der Substrateinheit durch gängige, automatisch durchführbare, Verfahren hergestellt werden.

Unter einer "Induktionsofenvorrichtung", soll insbesondere zumindest ein Teil, insbesondere eine Unterbaugruppe, eines Induktionsofens, verstanden werden, wobei insbesondere zusätzlich auch Zubehöreinheiten für den Induktionsofen umfasst sein können, wie beispielsweise eine Sensoreinheit zur externen Messung einer Temperatur eines Gargeschirrs und/oder eines Garguts. Insbesondere kann die Induktionsofenvorrichtung auch den gesamten Induktionsofen umfassen. Unter einem "Induktionsofen" soll insbesondere ein Haushaltsgerät verstanden werden, welches zumindest einen Garraum, zumindest eine Garmuffel, zumindest eine Ofentür und zumindest eine Heizeinheit aufweist, wobei der Garraum von der Garmuffel und der Ofentür nach Außen begrenzt ist und wobei die Heizeinheit dazu vorgesehen ist, ein im Garraum befindliches Gargeschirr und/oder Gargut während eines Betriebs des Induktionsofens zumindest zu einer Zubereitung und/oder Lagerung durch ein von der Heizeinheit induziertes Wechselfeld auf eine vordefinierte Temperatur zu erwärmen und zu halten.

Bevorzugt weist der Induktionsofen zumindest ein Innengehäuse und Außengehäuse auf. Unter einem "Innengehäuse" soll insbesondere eine Wandungseinheit verstanden werden, welche zumindest einen Innenraum, insbesondere einen Garraum, zumindest zu einem Großteil nach Außen abgrenzt und selbst zumindest durch das Außengehäuse nach Außen abgegrenzt ist. Vorteilhaft weist das Innengehäuse ein ferromagnetisches Metall auf. Besonders vorteilhaft ist die Induktionsspule dazu vorgesehen, zumindest einen Teil des Innengehäuses während eines Betriebs der Gargerätevorrichtung induktiv zu erwärmen. Bevorzugt umfasst der Teil des Innengehäuses eine Deckenwand und/oder eine Bodenwand des Innengehäuses, insbesondere um einen klassischen, als "Ober- und Unterhitze" bekannten Heizmodus bereitzustellen. Bevorzugt ist das Innengehäuse als eine Garmuffel ausgebildet. Unter einer "Garmuffel" soll ein Innengehäuse verstanden werden, welches einen Garraum eines Induktionsofens gemeinsam mit einer Ofentür des Induktionsofens zumindest zu einem Großteil nach Außen begrenzt. Unter einer "Ofentür" soll insbesondere eine Wandung verstanden werden, welche in einem geschlossenen Zustand eine, einem Bediener zugewandte Öffnung des Garraums vollständig abdeckt, und in einem geöffneten Zustand die Öffnung zumindest teilweise freigibt. Unter einem "Außengehäuse" eines Geräts soll insbesondere eine Wandungseinheit verstanden werden, welche eine Außenfläche des Geräts zumindest zu einem Großteil definiert. Unter "zumindest zu einem Großteil" soll in diesem Zusammenhang insbesondere zumindest zu 60 %, vorteilhaft zumindest zu 70 %, besonders vorteilhaft zumindest zu 80 %, bevorzugt zumindest zu 90 % und besonders bevorzugt vollständig verstanden werden.

Unter einer "Heizeinheit" soll insbesondere eine Einheit verstanden werden, welche dazu vorgesehen ist, zumindest ein in einem vordefinierten Heizbereich angeordnetes Gargut und/oder Gargeschirr zu erwärmen und/oder warmzuhalten. Insbesondere weist die Heizeinheit zumindest eine Induktionsspule auf, welche insbesondere während eines Betriebs der Heizeinheit mit Strom durchflossen ist und zumindest ein elektromagnetisches Feld zu einer Erwärmung und/oder Warmhaltung des Garguts und/oder Gargeschirrs erzeugt. Die Induktionsspule weist zumindest einen Leiter auf, welcher beispielsweise durch ein Stanzen und/oder Sägen und/oder Schneiden, insbesondere Strahlschneiden, einer Metallplatte hergestellt sein kann. Insbesondere kann der Leiter als ein Einzeldraht und/oder vorzugsweise als ein Litzendraht ausgebildet sein. Insbesondere kann eine Litzenstruktur eines als Litzendraht ausgebildeten Leiters die thermische Ausdehnung des Leiters kompensieren. Vorteilhaft weist der Leiter zumindest eine Beschichtung auf, welche den Leiter thermisch und/oder elektrisch isoliert.

Unter einer "Substrateinheit" soll insbesondere eine Einheit verstanden werden, welche insbesondere fest mit dem Innengehäuse verbunden sein kann und welche dazu vorgesehen ist, die Induktionsspule relativ zu dem Innengehäuse und/oder zu dem zu erwärmenden Gargeschirr und/oder Gargut zu halten. Insbesondere ist die Substrateinheit zwischen der Induktionsspule und dem Innengehäuse angeordnet. Alternativ könnte die Induktionsspule zwischen der Substrateinheit und dem Innengehäuse angeordnet sein. Denkbar wäre, dass die Gargerätevorrichtung mehrere Substrateinheiten aufweist, welche insbesondere gestapelt angeordnet sind und bevorzugt zwischen einzelnen Schichten jeweils eine Windung der Induktionsspule halten. Denkbar wäre, dass das Innengehäuse zu einer Aufnahme von zumindest der Heizeinheit dient. Beispielsweise könnte die Substrateinheit mit dem Innengehäuse verklebt und/oder vernietet und/oder verschraubt sein. Denkbar wäre, dass die Substrateinheit unmittelbar an dem Innengehäuse befestigt, insbesondere einstückig mit dem Innengehäuse ausgebildet ist. Hierdurch kann insbesondere ein Abstand der Induktionsspule zu dem Innengehäuse minimiert werden. Unter "einstückig ausgebildet" soll insbesondere zumindest stoffschlüssig verbunden verstanden werden, beispielsweise durch einen Schweißprozess, einen Klebeprozess, einen Anspritzprozess und/oder einen anderen, dem Fachmann als sinnvoll erscheinenden Prozess, und/oder vorteilhaft in einem Stück geformt verstanden werden, wie beispielsweise durch eine Herstellung aus einem Guss und/oder durch eine Herstellung in einem Ein- oder Mehrkomponentenspritzverfahren und vorteilhaft aus einem einzelnen Rohling.

Insbesondere könnte die Substrateinheit mittelbar an dem Innengehäuse befestigt sein. Ferner könnte die Heizeinheit zumindest eine Wärmeisolierung aufweisen, über welche die Substrateinheit mittelbar an dem Innengehäuse befestigt ist. Bevorzugt weist die Substrateinheit zumindest ein hitzeresistentes Material auf. Unter einem "hitzeresistenten Material" soll insbesondere ein Material verstanden werden, welches Temperaturen von zumindest 500°C, vorteilhaft zumindest 550°C und bevorzugt zumindest 600°C widersteht, ohne sich chemisch zu verändern. Besonders vorteilhaft weist die Substrateinheit zumindest ein elektrisch isolierendes Material auf. Unter einem "elektrisch isolierenden Material" soll insbesondere ein Material verstanden werden, welches einen spezifischen elektrischen Widerstand von zumindest 10¹² (Ω mm²)/m aufweist und insbesondere zumindest gegenüber einem während eines Betriebs durch die Induktionsspule fließenden Strom nichtleitend ist. Denkbar wäre, dass die Substrateinheit zumindest teilweise aus zumindest einem hitzeresistenten Kunststoff besteht.

Unter einer "Befestigungseinheit" soll insbesondere eine Einheit verstanden werden, welche dazu vorgesehen ist, die Induktionsspule zumindest teilweise, insbesondere vollständig, an der Substrateinheit zu befestigen. Insbesondere ist die Befestigungseinheit separat von der Substrateinheit und/oder dem Leiter ausgebildet. Bevorzugt weist die Befestigungseinheit zumindest ein hitzeresistentes und/oder elektrisch isolierendes Material auf. Vorteilhaft kann auf eine Verwendung zusätzlicher thermischer Isolierungen für die Befestigungseinheit und/oder die Substrateinheit verzichtet werden. Beispielsweise könnte die Befestigungseinheit ein zu einem Material der Substrateinheit identisches Material aufweisen. Insbesondere kann die Befestigungseinheit zu einer Befestigung der Induktionsspule an der Substrateinheit zumindest ein Befestigungselement aufweisen. Das Befestigungselement kann beispielsweise eine Klammer, eine Schraube, eine Klappe, ein Klebstoff und/oder ein Kunststoffprofil sein.

Unter einer "Durchlassöffnung" soll insbesondere eine von einem Rand der Substrateinheit beabstandete Ausnehmung der Substrateinheit verstanden werden, durch welche eine, bevorzugt entlang einer Haupterstreckungsebene der Substrateinheit verlaufende, erste Seite der Substrateinheit mit einer der ersten Seite gegenüberliegenden zweiten Seite der Substrateinheit verbunden ist. Bevorzugt weist die Substrateinheit eine Vielzahl von Durchlassöffnungen auf, welche insbesondere periodisch parallel zum Leiter angeordnet sind. Besonders bevorzugt verlaufen die Durchlassöffnungen in einem montierten Zustand entlang zumindest eines Großteils, insbesondere des gesamten, Leiters. Besonders bevorzugt ist die Durchlassöffnung ausweitbar. Unter einer "ausweitbaren Öffnung" soll in diesem Zusammenhang eine Öffnung verstanden werden, deren Umfang auf eine zumindest doppelte, vorteilhaft zumindest dreifache, besonders vorteilhaft zumindest vierfache, bevorzugt zumindest fünffache und besonders bevorzugt zumindest sechsfache Länge verlängerbar ist.

Darunter, dass das Befestigungselement "durch die Durchlassöffnung geführt ist", soll insbesondere verstanden werden, dass das Befestigungselement zumindest einen zusammenhängenden Teilbereich aufweist, welcher sich in einem montierten Zustand von der ersten Seite der Substrateinheit zur zweiten Seite der Substrateinheit erstreckt. Unter "vorgesehen" soll insbesondere speziell ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt.

In einem weiteren Aspekt der Erfindung wird vorgeschlagen, dass die Substrateinheit zumindest ein Silikat aufweist. Unter einem "Silikat" soll insbesondere ein Material verstanden werden, welches zumindest die chemischen Elemente Silizium und Sauerstoff enthält. Insbesondere soll unter einem Silikat ein Salz und/oder ein Ester einer Ortho-Kieselsäure und insbesondere auch deren Kondensat verstanden werden. Insbesondere soll darunter ein Mineral verstanden werden, dessen chemische Zusammensetzung zumindest einen SiO₄-Tetraeder aufweist. Beispielhafte Anwendungen für Silikate sind Fasern und/oder Gläser. Bevorzugt weist die Substrateinheit zumindest Basalt, Spat, Dolomit, Diabas, Anorthosit, Koks, Glasfasern, Wasserglas und/oder Glimmer auf. Bevorzugt besteht die Substrateinheit zumindest teilweise, vorzugsweise zu einem Großteil und besonders vorteilhaft vollständig aus dem Silikat. Die Substrateinheit ist mattenartig ausgebildet. Unter einem "mattenartigen Element" soll ein Element verstanden werden, für welches ein kleinstmöglicher, gedachter Quader existiert, der das Element gerade noch aufnimmt, dessen kürzeste Seite höchstens 30 %, vorteilhaft höchstens 20 %, besonders vorteilhaft höchstens 10 %, bevorzugt höchstens 5 % und besonders bevorzugt höchstens 2 % einer längsten Seite des Quaders entspricht. Insbesondere ist ein mattenförmiges Element dehnbar, bevorzugt faltbar. Insbesondere kann die Substrateinheit auch plattenförmig ausgebildet sein. Bevorzugt weist die Substrateinheit eine Dicke von höchstens 500 µm, vorteilhaft höchstens 450 µm, besonders vorteilhaft höchstens 400 µm, bevorzugt höchstens 300 µm und besonders bevorzugt höchstens 200 µm auf. Hierdurch kann insbesondere eine Robustheit und eine Kosteneffizienz gesteigert werden. Vorteilhaft kann eine thermische und/oder elektrische Isolierung der Induktionsspule bereitgestellt werden. Besonders vorteilhaft kann auf zusätzliche Bauteile zu einer thermischen und/oder elektrischen Isolierung der Induktionsspule verzichtet werden.

Ferner wird vorgeschlagen, dass das Befestigungselement zumindest ein Silikat aufweist. Insbesondere kann ein Silikat des Befestigungselements von einem Silikat der Befestigungseinheit verschieden sein. Bevorzugt ist das Silikat des Befestigungselements identisch zum Silikat der Befestigungseinheit. Hierdurch kann insbesondere eine Robustheit gesteigert werden. Vorteilhaft kann eine, durch das Führen des Befestigungselements durch die Durchlassöffnung erzeugte, Ausnehmung der thermischen und/oder elektrischen Isolierung der Induktionsspule vermieden werden.

Weiterhin wird vorgeschlagen, dass die Substrateinheit zu einer Befestigung der Induktionsspule zumindest teilweise durchstoßbar ist. Darunter, dass die Substrateinheit "zumindest teilweise durchstoßbar" ist, soll verstanden werden, dass die Substrateinheit zumindest einen Teilbereich aufweist, welcher zumindest einen ersten Teilbereich der erste Seite der Substrateinheit und einen zweiten Teilbereich der zweite Seite der Substrateinheit umfasst, den ein, vorzugsweise längliches, Objekt zu einer Erzeugung und/oder Ausweitung der Durchlassöffnung durchstoßen kann ohne umliegende weitere Teilbereiche der Substrateinheit zu beschädigen. Denkbar wäre, dass die Substrateinheit durch das Befestigungselement durchstoßbar ist. Bevorzugt ist die Substrateinheit durch ein weiteres Element, beispielsweise eine Nadel und/oder ein Stanzwerkzeug und/oder ein Schneidwerkzeug, durchstoßbar. Hierdurch kann insbesondere eine einfache und kostengünstige Herstellung und/oder Anpassung der Induktionsofenvorrichtung erreicht werden. Vorteilhaft kann die Durchlassöffnung durch gängige und kostengünstige Verfahren erzeugt und/oder ausgeweitet werden.

Vorteilhaft ist die Substrateinheit zumindest teilweise faserartig. Unter einem "faserartigen Element" soll insbesondere ein Element verstanden werden, welches zumindest teilweise aus Fasern besteht. Unter einer "Faser" soll insbesondere ein längliches, mattenförmiges Element verstanden werden, welches zumindest teilweise biegsam ist. Unter einem "zumindest teilweise biegsamen Element" soll in diesem Zusammenhang insbesondere verstanden werden, dass das Element Krümmungen um zumindest 20°, vorteilhaft um zumindest 30°, besonders vorteilhaft um zumindest 40°, bevorzugt um zumindest 50° und besonders bevorzugt um zumindest 60° erfahren kann, ohne eine dauerhafte Verformung und/oder Beschädigung zu erfahren. Bevorzugt ist das Element biegsam genug, um ein Zusammenfassen zahlreicher dieser Elemente nach zumindest einem vordefinierten eindimensionalen Muster, bevorzugt zu einem Garn und/oder Zwirn und/oder einer Schnur, zuzulassen. Vorteilhaft ist die Substrateinheit vollständig faserartig. Denkbar wäre, dass die Substrateinheit zumindest teilweise um die Induktionsspule gewickelt ist. Bevorzugt ist die Durchlassöffnung als ein ausgeweiteter Abstand zwischen einzelnen Fasern der Substrateinheit ausgebildet. Hierdurch kann insbesondere eine Robustheit gesteigert und eine einfache Herstellung der Substrateinheit erreicht werden. Vorteilhaft kann eine Beschädigung der Substrateinheit durch einen Biegeprozess vermieden werden. Besonders vorteilhaft kann die Substrateinheit durch ein Hinzufügen weiterer Fasern auf einfache Weise angepasst werden. Ferner kann ein Durchstoßen der Substrateinheit zu einer Erzeugung und/oder Ausweitung der Durchlassöffnung auf einfache Weise durchgeführt werden.

Bevorzugt weist die Substrateinheit zumindest ein flächenförmiges textiles Gebilde auf. Vorteilhaft ist die Substrateinheit vollständig aus dem flächenförmigen textilen Gebilde gebildet. Unter einem "flächenförmigen textilen Gebilde" soll insbesondere eine Struktur verstanden werden, welche aus einer Vielzahl von Fasern, insbesondere Fasersträngen, gebildet ist, welche nach zumindest einem vordefinierten, mattenförmigen Muster zusammengefasst sind. Beispielhafte flächenförmige textile Gebilde umfassen Gewebe und/oder Gewirke und/oder Gestricke und/oder Geflechte und/oder Nähgewirke und/oder Vliesstoff und/oder Filz. Hierdurch kann insbesondere eine effektive thermische und/oder elektrische Isolierung der Induktionsspule auf eine einfache und kostengünstige Art erreicht werden. Vorteilhaft können Ausnehmungen in der thermischen und/oder elektrischen Isolierung der Induktionsspule vermieden werden. Besonders vorteilhaft kann die Substrateinheit auf einfache und kostengünstige Weise hergestellt und/oder angepasst werden.

Des Weiteren wird vorgeschlagen, dass das Befestigungselement als ein Faden ausgebildet und die Induktionsspule mit der Substrateinheit mittels zumindest einer den Faden aufweisenden Naht befestigt ist. Insbesondere kann der Faden die Substrateinheit gemäß verschiedener, standardisierter Nähmethoden durchdringen, welche insbesondere in ASTM D-6193 und ISO 4915:1991 aufgeführt sind. Beispielsweise können die Naht und/oder die weiteren Nähte gemäß einer Lockstitch-Methode und/oder einer Zig Zag-Methode verlaufen. Insbesondere kann eine longitudinale Richtung des Fadens einer longitudinalen Richtung eines nächstliegenden Leiterabschnitts des Leiters entsprechen. Insbesondere bildet ein Durchstoßen der Substrateinheit durch zumindest eine Nadel und/oder zumindest ein Stanzwerkzeug und/oder zumindest ein Schneidwerkzeug das Erzeugen und/oder Ausweiten der Durchlassöffnung aus. Vorteilhaft kann der Faden zumindest abschnittsweise über dem Leiter laufen. Vorteilhaft kann der Faden zumindest abschnittsweise seitlich neben dem Leiter laufen. Hierdurch kann insbesondere eine einfache und kostengünstige Herstellung der Induktionsofenvorrichtung erreicht werden. Vorteilhaft können zu einer Herstellung der Induktionsofenvorrichtung gängige und kosteneffektive Nähmaschinen verwendet werden.

In einer vorteilhaften Ausgestaltung besteht die Substrateinheit zumindest teilweise, vorzugsweise zumindest zu einem Großteil, aus Basalt. Bevorzugt besteht die Substrateinheit zumindest teilweise, vorteilhaft vollständig, aus Basaltfasern. Insbesondere kann der Basalt zumindest ein ferromagnetisches Material, insbesondere Magnetit, enthalten. Insbesondere kann die Substrateinheit aus gepressten Basaltfasern bestehen. Bevorzugt besteht die Substrateinheit aus, zu einem flächenförmigen textilen Gebilde zusammengefassten, Basaltfasern. Hierdurch kann insbesondere eine Robustheit gesteigert werden. Vorteilhaft kann eine Druck- und Stoßfestigkeit und eine Hitzeresistenz der thermischen und elektrischen Isolierung der Induktionsspule erhöht werden.

Ferner wird vorgeschlagen, dass die Substrateinheit zumindest teilweise, vorzugsweise zumindest zu einem Großteil, aus Glasfasern besteht. Denkbar wäre, dass die Substrateinheit vollständig aus Glasfasern besteht. Ferner wäre denkbar, dass die Substrateinheit zumindest einen mit Glasfasern verstärkten Kunststoff aufweist. Hierdurch kann insbesondere eine Flexibilität erhöht werden. Vorteilhaft kann eine Gewichtsreduzierung und eine Elastizität der thermischen und elektrischen Isolierung der Induktionsspule erhöht werden.

Außerdem wird vorgeschlagen, dass die Befestigungseinheit zumindest ein Abdeckelement aufweist, welches auf einer der Substrateinheit gegenüberliegenden Seite der Induktionsspule angeordnet ist und auf dieser Seite eine Bewegung der Induktionsspule einschränkt.. Denkbar wäre, dass die Befestigungseinheit eine Vielzahl von Abdeckelementen aufweist, welche gemeinsam den gesamten Bereich abdecken. Bevorzugt ist das Abdeckelement mittels der den Faden und/oder weiteren Faden aufweisenden Naht und/oder weiteren Naht an der Substrateinheit befestigt. Bevorzugt weist die Befestigungseinheit genau ein Abdeckelement auf, welches insbesondere die gesamte Induktionsspule abdeckt. Insbesondere verläuft eine Haupterstreckungsebene des Abdeckelements parallel zu einer Haupterstreckungsebene der Induktionsspule. Vorteilhaft weist das Abdeckelement zumindest ein elektrisch isolierendes und/oder hitzeresistentes Material auf. Bevorzugt weist das Abdeckelement ein zu einem Material der Substrateinheit identisches Material auf. Insbesondere kann das Abdeckelement einstückig mit der Substrateinheit ausgebildet sein. Denkbar wäre, dass das Abdeckelement und die Substrateinheit als angrenzende Teilbereiche eines Elements der Befestigungseinheit ausgebildet sind und vorteilhaft durch ein Falten des Elements um die Induktionsspule angeordnet sind. Hierdurch kann insbesondere eine Halterung der Induktionsspule verbessert werden. Vorteilhaft kann eine Bewegung der Induktionsspule entlang einer Richtung senkrecht zu einer Haupterstreckungsebene der Substrateinheit vermieden werden.

Bevorzugt weist das Abdeckelement zumindest ein Silikat auf. Besonders bevorzugt weist das Abdeckelement ein zu einem Material der Substrateinheit identisches Material auf. Hierdurch kann insbesondere eine einfache Herstellung der Induktionsofenvorrichtung und eine verbesserte thermische und elektrische Isolierung der Induktionsspule erreicht werden. Vorteilhaft kann das Abdeckelement durch ein zu einer Herstellung der Substrateinheit identisches Verfahren hergestellt werden. Besonders vorteilhaft kann die Induktionsspule zu zumindest zwei Seiten thermisch und elektrisch isoliert werden.

Die Erfindung geht ferner aus von einem Verfahren zur Herstellung einer Induktionsofenvorrichtung mit zumindest einer Heizeinheit, welche zumindest eine Induktionsspule mit wenigstens einem elektrischen Leiter und zumindest eine Substrateinheit aufweist, wobei die Induktionsspule an der Substrateinheit befestigt wird, wobei zur Befestigung des Leiters durch die Substrateinheit ein Befestigungselement geführt wird.

Es wird vorgeschlagen, dass die Substrateinheit mattenartig ausgebildet wird. Hierdurch kann insbesondere ein Verfahren zur Herstellung einer Induktionsofenvorrichtung mit einer erhöhten Robustheit und einer vereinfachten Herstellung bereitgestellt werden.

Die Induktionsofenvorrichtung soll hierbei nicht auf die oben beschriebene Anwendung und Ausführungsform beschränkt sein. Insbesondere kann die Induktionsofenvorrichtung zu einer Erfüllung einer hierin beschriebenen Funktionsweise eine von einer hierin genannten Anzahl von einzelnen Elementen, Bauteilen und Einheiten abweichende Anzahl aufweisen.

Weitere Vorteile ergeben sich aus der folgenden Zeichnungsbeschreibung. In den Zeichnungen sind acht verschiedene Ausführungsbeispiele der Erfindung dargestellt. Die Zeichnungen, die Beschreibung und die Ansprüche enthalten zahlreiche Merkmale in Kombination.

Es zeigen:
- Fig. 1: eine schematische Vorderansicht eines Gargeräts mit einer Gargerätevorrichtung,
- Fig. 2: eine Explosionsdarstellung eines Teils der Gargerätevorrichtung,
- Fig. 3: eine schematische Schrägansicht eines Teils der Gargerätevorrichtung mit einer Heizeinheit,
- Fig. 4: eine schematische Draufsicht der Heizeinheit mit einer Induktionsspule und einer Substrateinheit,
- Fig. 5: ein schematisches Verlaufsdiagramm eines Verfahrens zur Herstellung der Gargerätevorrichtung,
- Fig. 6a: eine schematische Draufsicht eines Teils einer Gargerätevorrichtung mit einer ersten relativen Anordnung eines Leiters zu einem Faden,
- Fig. 6b: eine schematische Draufsicht eines Teils einer Gargerätevorrichtung mit einer zweiten relativen Anordnung eines Leiters zu einem Faden,
- Fig. 6c: eine schematische Draufsicht eines Teils einer Gargerätevorrichtung mit einer dritten relativen Anordnung eines Leiters zu einem Faden,
- Fig. 7a: eine schematische Draufsicht eines Teils einer Gargerätevorrichtung mit einem von der Seite minimal beabstandeten weiteren Faden und einem von der gegenüberliegenden Seite minimal beabstandeten Faden,
- Fig. 7b: eine schematische Draufsicht eines Teils einer Gargerätevorrichtung mit einem von der Seite minimal beabstandeten weiteren Faden und einem von der gegenüberliegenden Seite mit einem Abstand verlaufenden Faden,
- Fig. 7c: eine schematische Draufsicht eines Teils einer Gargerätevorrichtung mit einem an der Seite mit einem Abstand verlaufenden weiteren Faden und einem von der gegenüberliegenden Seite minimal beabstandeten Faden,
- Fig. 8a: eine schematische Draufsicht eines Ausschnitts einer Gargerätevorrichtung mit einem einen Leiter kreuzenden Faden, welcher am Leiter anliegt,
- Fig. 8b: eine schematische Draufsicht eines Ausschnitts einer Gargerätevorrichtung mit einem einen Leiter kreuzenden Faden, welcher abschnittsweise mit einem Abstand zum Leiter verläuft, und
- Fig. 9: ein schematisches Verlaufsdiagramm eines weiteren Verfahrens zur Herstellung der Gargerätevorrichtung aus Fig. 8b.

Von mehrfach vorhandenen Objekten ist in den Figuren jeweils lediglich eines mit einem Bezugszeichen versehen.

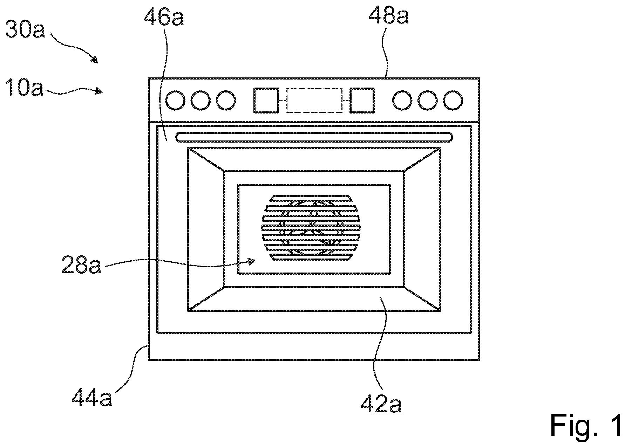

Fig. 1 zeigt ein Gargerät 30a. Das Gargerät 30a ist als ein Induktionsofen ausgebildet. Das Gargerät 30a weist ein Außengehäuse 44a auf. Das Außengehäuse 44a definiert eine Außenkontur des Gargeräts 30a. Das Außengehäuse 44a nimmt eine Benutzerschnittstelle 48a des Gargeräts 30a auf. Die Benutzerschnittstelle 48a ist dazu vorgesehen, von einem Bediener zu einer Steuerung des Gargeräts 30a bedient zu werden. Das Gargerät 30a weist ein Innengehäuse 42a auf. Das Innengehäuse 42a besteht aus einem ferromagnetischen Metall. Alternativ könnte das Innengehäuse 42a ein nichtmagnetisches Material, insbesondere Glas, vorzugsweise eine Glaskeramik, aufweisen. In dieser alternativen Ausgestaltung weist das Innengehäuse 42a mehrere Heizelemente (nicht dargestellt) auf, welche aus einem ferromagnetischen Metall bestehen. Das Gargerät 30a weist eine Ofentür 46a auf. Die Ofentür 46a befindet sich in einem geschlossenen Zustand. Die Ofentür 46a deckt eine, einem Bediener zugewandte, Öffnung 52a eines Garraums 28a vollständig ab. Die Ofentür 46a und das Innengehäuse 42a grenzen gemeinsam den Garraum 28a nach Außen ab. Das Gargerät 30a weist eine Gargerätevorrichtung 10a auf. Die Gargerätevorrichtung 10a ist als eine Induktionsofenvorrichtung ausgebildet.

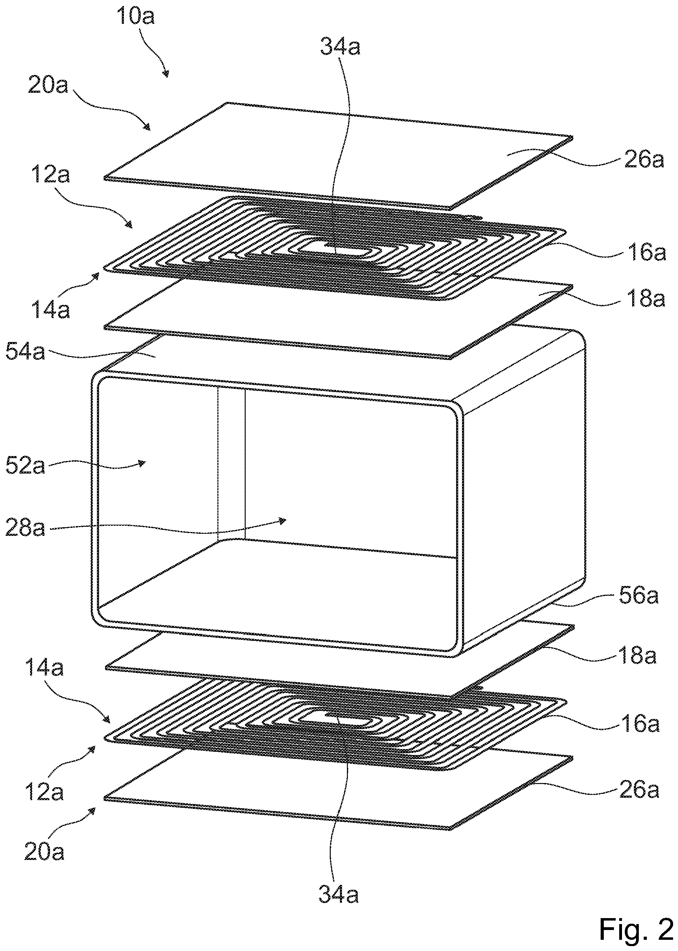

Ein Teil der Gargerätevorrichtung 10a ist in Fig. 2 in einer Explosionsdarstellung näher dargestellt. Die Gargerätevorrichtung 10a weist das Innengehäuse 42a auf. Die Gargerätevorrichtung 10a weist zwei Heizeinheiten 12a auf. Die Heizeinheiten 12a sind zueinander identisch ausgebildet. Die Heizeinheiten 12a sind an einer Deckenwand 54a und an einer Bodenwand 56a des Innengehäuses 42a angeordnet. Alternativ oder zusätzlich wäre denkbar, dass Heizeinheiten 12a an Seitenwänden oder einer Rückwand des Innengehäuses 42a angeordnet sind. Im Folgenden wird lediglich eine der Heizeinheiten 12a beschrieben.

Die Heizeinheit 12a weist eine Induktionsspule 14a auf. Die Induktionsspule 14a wird in einem Betrieb der Heizeinheit 12a mit einem Wechselstrom durchflossen und erzeugt ein elektromagnetisches Wechselfeld. Die Induktionsspule 14a ist plattenförmig ausgebildet. Eine Haupterstreckungsebene (nicht dargestellt) der Induktionsspule 14a verläuft parallel zu einer Haupterstreckungsebene der Deckenwand 54a und der Bodenwand 56a. Die Induktionsspule 14a weist einen Leiter 16a auf. Der Leiter 16a ist als ein Einzeldraht ausgebildet. Der Leiter 16a ist als ein blanker Einzeldraht ausgebildet. Alternativ könnte der Leiter 16a eine Isolierung aufweisen. Der Leiter 16a weist Aluminium auf. Alternativ könnte der Leiter 16a Kupfer aufweisen. Der Leiter 16a ist als eine rechteckige Spirale angeordnet. Der Leiter 16a ist um eine Spulenmitte 34a der Induktionsspule 14a gewickelt.

Die Heizeinheit 12a weist eine Substrateinheit 18a auf. Die Substrateinheit 18a ist mattenartig ausgebildet. Die Substrateinheit 18a ist zwischen der Induktionsspule 14a und dem Innengehäuse 42a angeordnet. Die Induktionsspule 14a liegt vollständig auf der Substrateinheit 18a auf. Die Substrateinheit 18a dient einer thermischen und elektrischen Isolierung der Induktionsspule 14a. Die Substrateinheit 18a besteht zumindest zu einem Großteil aus einem Material, welches zumindest die chemischen Elemente Si und O aufweist. Das Material ist ein Silikat. Die Substrateinheit 18a ist faserartig. Die Substrateinheit 18a besteht aus Mineralwolle. Die Substrateinheit 18a weist Basaltfasern auf. Alternativ oder zusätzlich könnte die Substrateinheit 18a Spatfasern, Dolomitfasern, Diabasfasern, Anorthositfasern und/oder Koksfasern aufweisen. Die Substrateinheit 18a ist zu einer Befestigung der Induktionsspule 14a zumindest teilweise durchstoßbar. Die Substrateinheit 18a besteht vollständig aus einem flächenförmigen textilen Gebilde. Die Substrateinheit 18a besteht vollständig aus einem Basaltgewebe. Alternativ könnte die Substrateinheit 18a teilweise aus dem Basaltgewebe bestehen. Die Substrateinheit 18a weist eine Vielzahl von Durchlassöffnungen 24a auf. Die Durchlassöffnungen 24a sind periodisch angeordnet. Die Durchlassöffnungen 24a sind entlang einer Vielzahl von Geraden angeordnet.

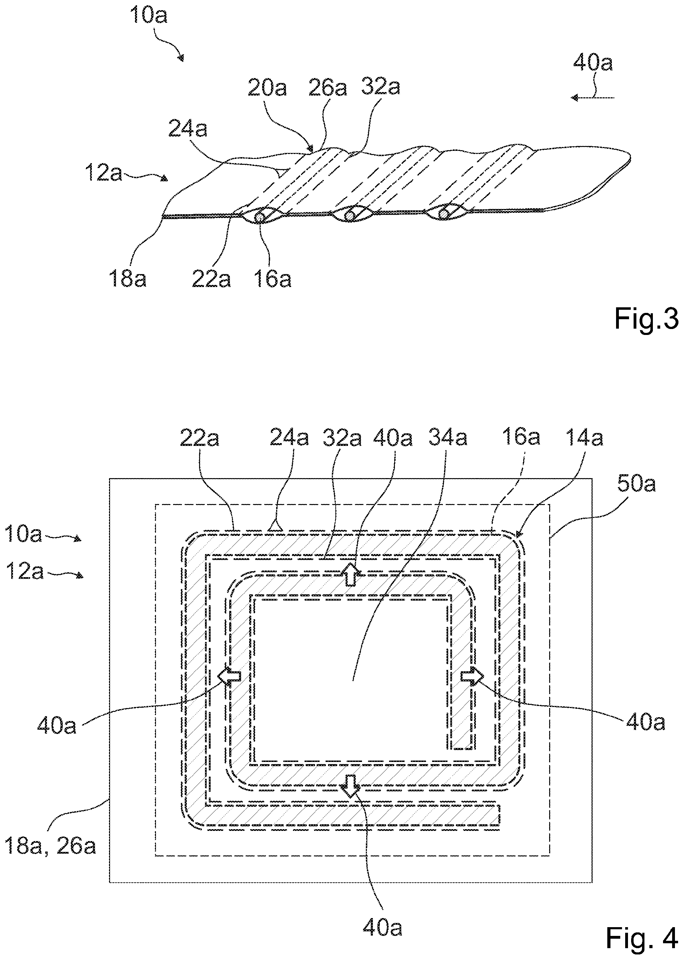

Die Heizeinheit 12a weist eine Befestigungseinheit 20a auf (vgl. Fig. 3). Die Befestigungseinheit 20a befestigt die Induktionsspule 14a an der Substrateinheit 18a. Die Befestigungseinheit 20a befestigt den Leiter 16a in einem Bereich relativ zu der Substrateinheit 18a beweglich an der Substrateinheit 18a. Dabei erstreckt sich der Bereich über eine gesamte Erstreckung der Induktionsspule 14a. Die Befestigungseinheit 20a weist ein Befestigungselement 22a auf. Das Befestigungselement 22a ist als ein Faden 22a ausgebildet. Die Induktionsspule 14a ist an der Substrateinheit 18a mittels einer den Faden 22a aufweisenden Naht befestigt. Der Faden 22a ist vollständig aus Silikat ausgebildet. Der Faden 22a ist vollständig aus Wasserglas ausgebildet. Alternativ könnte der Faden 22a aus Mineralwolle und/oder Glasfasern bestehen. Der Faden 22a ist durch einen Teil der Durchlassöffnungen 24a geführt. Der Faden 22a ist gemäß einer Lockstitch-Nähmethode durch die Durchlassöffnungen 24a geführt. Der Faden 22a verläuft bei einer senkrechten Betrachtung auf die Substrateinheit 18a vollständig seitlich neben dem Leiter 16a. Der Faden 22a verläuft parallel zum Leiter 16a. Der Faden 22a verläuft mit einem Abstand zum Leiter 16a.

Die Befestigungseinheit 20a weist ein weiteres Befestigungselement 32a auf. Die Induktionsspule 14a ist an der Substrateinheit 18a mittels einer einen weiteren Faden 32a aufweisenden weiteren Naht befestigt. Der weitere Faden 32a ist identisch zu dem Faden 22a ausgebildet. Der weitere Faden 32a weist einen zu einem Verlauf des Fadens 22a identischen weiteren Verlauf auf. Der weitere Faden 32a ist durch einen weiteren Teil der Durchlassöffnungen 24a geführt. Der weitere Faden 32a verläuft bei einer senkrechten Betrachtung auf die Substrateinheit 18a auf einer dem Faden 22a gegenüberliegenden Seite des Leiters 16a. Ein Abstand des Fadens 22a zum Leiter 16a ist vor einem Betrieb der Gargerätevorrichtung 10a zumindest weitgehend identisch zu einem weiteren Abstand des weiteren Fadens 32a zum Leiter 16a.

Die Befestigungseinheit 20a weist ein Abdeckelement 26a auf. Alternativ könnte die Befestigungseinheit 20a eine Vielzahl von Abdeckelementen 26a aufweisen. Das Abdeckelement 26a weist ein Silikat auf. Das Abdeckelement 26a weist Basaltfasern auf. Alternativ oder zusätzlich könnte das Abdeckelement 26a Spatfasern, Dolomitfasern, Diabasfasern, Anorthositfasern und/oder Koksfasern aufweisen. Das Abdeckelement 26a ist identisch zur Substrateinheit 18a ausgebildet. Das Abdeckelement 26a ist auf einer der Substrateinheit 18a gegenüberliegenden Seite der Induktionsspule 14a angeordnet. Das Abdeckelement 26a und die Substrateinheit 18a sind innerhalb des Bereichs miteinander vernäht. Das Abdeckelement 26a und die Substrateinheit 18a sind mittels der den Faden 22a aufweisenden Naht miteinander vernäht. Das Abdeckelement 26a und die Substrateinheit 18a sind mittels der den weiteren Faden 32a aufweisenden weiteren Naht miteinander vernäht. Das Abdeckelement 26a und die Substrateinheit 18a berühren sich abschnittsweise in dem Bereich. Das Abdeckelement 26a und die Substrateinheit 18a bilden einen Anschlag hinsichtlich einer erlaubten Bewegung des Leiters 16a. Der Anschlag ist durch die Naht und die weitere Naht gebildet.

Die Induktionsspule 14a liegt vollständig an dem Abdeckelement 26a an. Alternativ könnte die Induktionsspule 14a ausschließlich in dem Bereich an dem Abdeckelement 26a anliegen. Das Abdeckelement 26a schränkt auf dieser Seite eine Bewegung der Induktionsspule 14a ein. Das Abdeckelement 26a, der Faden 22a und der weitere Faden 32a definieren gemeinsam den Bereich. Der Faden 22a und der weitere Faden 32a bilden Anschläge, an denen die Substrateinheit 18a und das Abdeckelement 26a vernäht sind. Die Anschläge schränken eine Bewegung der Induktionsspule 14a parallel zu einer Haupterstreckungsebene der Induktionsspule 14a ein. Die Substrateinheit 18a und das Abdeckelement 26a schränken in dem Bereich eine Bewegung der Induktionsspule 14a senkrecht zu der Haupterstreckungsebene der Induktionsspule 14a ein. Erlaubte Bewegungen des Leiters 16a umfassen eine Bewegung entlang einer bezüglich einer Spulenmitte 34a abgewandten Richtung 40a, welche bei einer senkrechten Betrachtung auf die Substrateinheit 18a der Spulenmitte 34a der Induktionsspule 14a abgewandt ist. Die Länge der erlaubten Bewegung entlang der Richtung 40a ist identisch zu einer Länge, um die sich der Leiter 16a während eines Betriebs der Gargerätevorrichtung 10a dehnt. Erlaubte Bewegungen des Leiters 16a umfassen eine Bewegung entgegen der Richtung 40a.

In Fig. 4 ist die Gargerätevorrichtung 10a vor einem Betrieb der Gargerätevorrichtung 10a dargestellt. Aus Gründen der Übersichtlichkeit ist die Induktionsspule 14a in einer vereinfachten Form mit einer reduzierten Anzahl an Windungen und einem schraffierten Leiter 16a dargestellt. Zusätzlich ist der Abstand des Fadens 22a und des weiteren Fadens 32a von dem Leiter 16a reduziert dargestellt. Der Bereich umfasst die gesamte Induktionsspule 14a. Die Befestigungseinheit 20a weist einen zusätzlichen Faden 50a auf. Der zusätzliche Faden 50a verläuft entlang eines kleinstmöglichen Rechtecks, welches eine Projektion der Induktionsspule 14a auf die Substrateinheit 18a gerade noch aufnimmt. Der zusätzliche Faden 50a umfährt die Induktionsspule 14a vollständig. Der zusätzliche Faden 50a dient der Stabilisierung der Substrateinheit 18a und des Abdeckelements 26a. Der Leiter 16a erfährt während eines Betriebs der Gargerätevorrichtung 10a thermische Ausdehnungen. Die thermischen Ausdehnungen erzeugen Dehnbewegungen der Induktionsspule 14a in die Richtung 40a. Die Dehnbewegungen sind innerhalb des Bereichs erlaubte Bewegungen der Induktionsspule 14a.

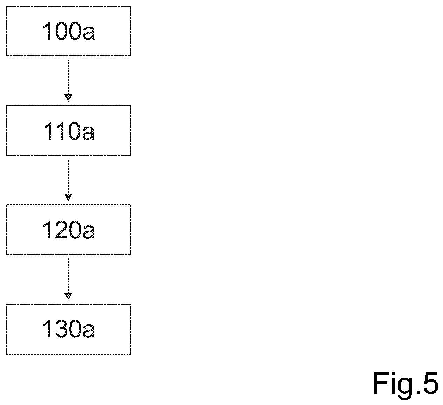

Fig. 5 zeigt ein schematisches Verlaufsdiagramm eines Verfahrens zur Herstellung der Gargerätevorrichtung 10a. In einem Wicklungsschritt 100a wird die Induktionsspule 14a durch ein Wickeln des Leiters 16a hergestellt. Alternativ könnte die Induktionsspule 14a durch ein Aufwickeln eines Litzendrahts und/oder ein Ausstanzen des Leiters 16a aus einer Metallplatte (nicht dargestellt) hergestellt werden.

In einem Isolierschritt 110a wird die Induktionsspule 14a auf die Substrateinheit 18a gelegt und mit dem Abdeckelement 26a abgedeckt. Der Isolierschritt 110a folgt hierbei auf den Wicklungsschritt 100a.

In einem Nähschritt 120a werden die Substrateinheit 18a und das Abdeckelement 26a durch eine Nähnadel durchstoßen. Die Substrateinheit 18a und das Abdeckelement 26a werden gemäß der Lockstitch-Nähmethode miteinander vernäht. Der Faden 22a wird hierbei durch einen Teil der Durchlassöffnungen 24a geführt. Im Anschluss wird auf identische Weise der weitere Faden 32a durch einen weiteren Teil der Durchlassöffnungen 24a geführt. Der Nähschritt 120a folgt hierbei auf den Isolierschritt 110.

In einem Montageschritt 130a wird die Heizeinheit 12a am Innengehäuse 42a montiert. Die Heizeinheit 12a wird an das Innengehäuse 42a geschraubt. Alternativ könnte die Heizeinheit 12a auch an das Innengehäuse 42a geklemmt und/oder genietet werden.

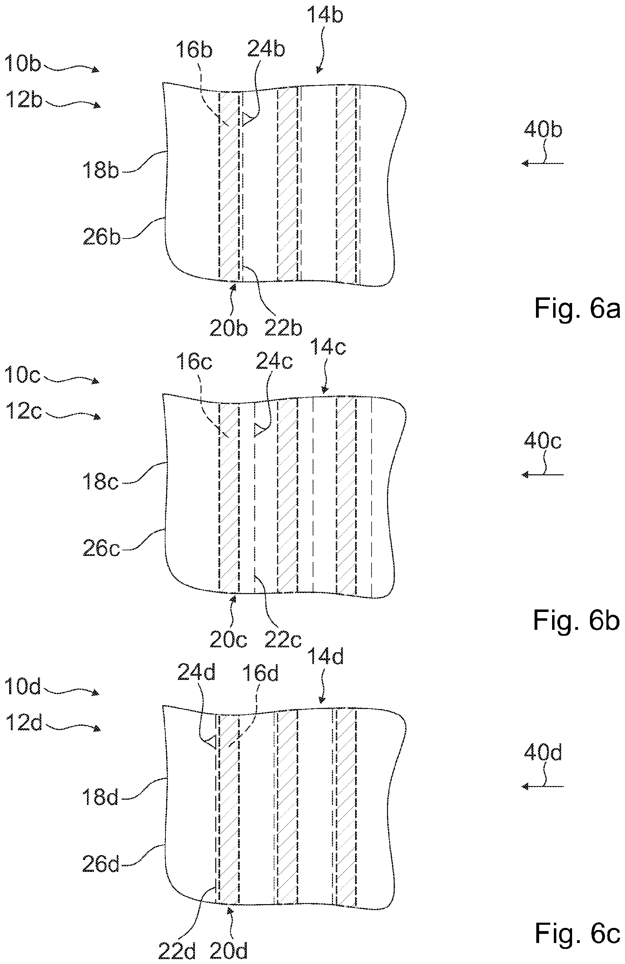

In den Fig. 6a bis 9 sind weitere Ausführungsbeispiele der Erfindung gezeigt. Die nachfolgenden Beschreibungen beschränken sich im Wesentlichen auf die Unterschiede zwischen den Ausführungsbeispielen, wobei bezüglich gleich bleibender Bauteile, Merkmale und Funktionen auf die Beschreibung des Ausführungsbeispiels der Fig. 1 bis 5 verwiesen werden kann. Zur Unterscheidung der Ausführungsbeispiele ist der Buchstabe a in den Bezugszeichen des Ausführungsbeispiels in den Fig. 1 bis 5 durch die Buchstaben b bis i in den Bezugszeichen der Ausführungsbeispiele der Fig. 6a bis 9 ersetzt. Bezüglich gleich bezeichneter Bauteile, insbesondere in Bezug auf Bauteile mit gleichen Bezugszeichen, kann grundsätzlich auch auf die Zeichnungen und/oder die Beschreibung des Ausführungsbeispiels der Fig. 1 bis 5 verwiesen werden.

Der Übersichtlichkeit halber sind in den folgenden Figuren von Abdeckelementen 26b-g bedeckte Leiter 16b-g schraffiert dargestellt.

In Fig. 6a-c ist jeweils ein Teil von Gargerätevorrichtungen 10b, 10c, 10d dargestellt. Induktionsspulen 14b, 14c, 14d der Gargerätevorrichtungen 10b, 10c, 10d sind mittels Fäden 22b, 22c, 22d aufweisende Nähte an Substrateinheiten 18b, 18c, 18d befestigt. Abdeckelemente 26b, 26c, 26d sind mittels der die Fäden 22b, 22c, 22d aufweisenden Nähten miteinander vernäht. In der Gargerätevorrichtung 10b verläuft ein Faden 22b entlang einer, **entgegen** einer bezüglich einer Spulenmitte (nicht dargestellt) abgewandten Richtung 40b ausgerichteten, Seite eines Leiters 16b von dem Leiter 16b minimal beabstandet. Der Leiter 16b ist **entgegen** der Richtung 40b weitgehend unbeweglich an der Substrateinheit 18b befestigt. Die Substrateinheit 18b besteht vollständig aus Glasfasern. In der Gargerätevorrichtung 10c verläuft ein Faden 22c entlang einer, entlang einer bezüglich einer Spulenmitte (nicht dargestellt) abgewandten Richtung 40c ausgerichteten, Seite eines Leiters 16c mit einem Abstand zum Leiter 16c. Der Leiter 16c ist entlang und **entgegen** der Richtung 40c beweglich an der Substrateinheit 18c befestigt. In der Gargerätevorrichtung 10d verläuft ein Faden 22d entlang einer, entlang bezüglich einer Spulenmitte (nicht dargestellt) abgewandten Richtung 40d ausgerichteten, Seite eines Leiters 16d vom Leiter 16d minimal beabstandet. Der Leiter 16d ist entlang der Richtung 40d unbeweglich an der Substrateinheit 18d befestigt.

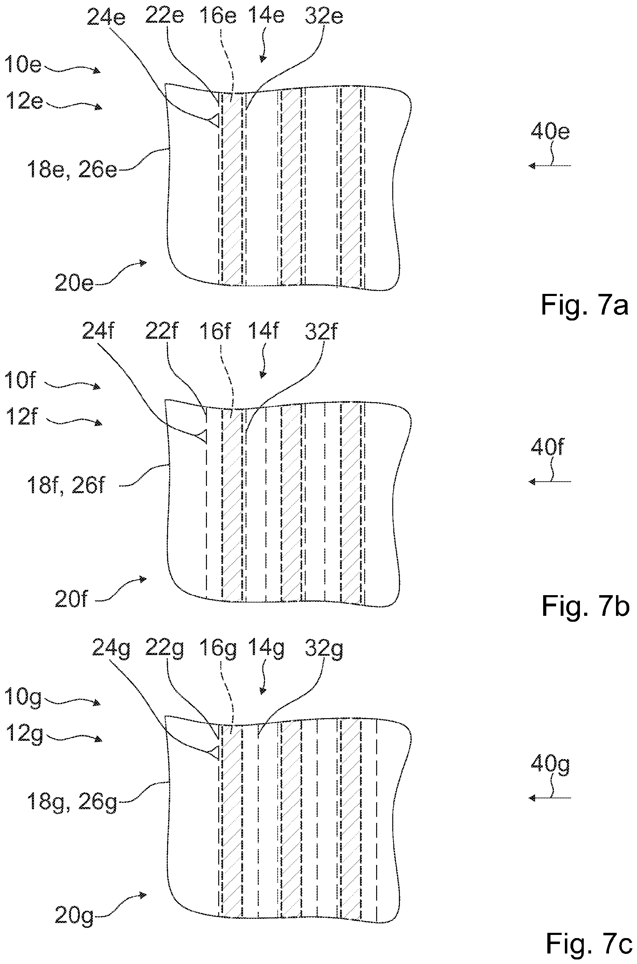

In Fig. 7a-c ist jeweils ein Teil von Gargerätevorrichtungen 10e, 10f, 10g dargestellt. In den Gargerätevorrichtungen 10e, 10f, 10g verlaufen Fäden 22e, 22f, 22g und weitere Fäden 32e, 32f, 32g entlang gegenüberliegender Seiten von Leitern 16e, 16f, 16g. In der Gargerätevorrichtung 10e verlaufen der Faden 22e und der weitere Faden 32e vom Leiter 16e minimal beabstandet. Der Leiter 16e ist entlang und **entgegen** einer bezüglich einer Spulenmitte (nicht dargestellt) abgewandten Richtung 40e unbeweglich an einer Substrateinheit 18e befestigt. In der Gargerätevorrichtung 10f verläuft ein Faden 22f mit einem Abstand zu einem Leiter 16f. Ein weiterer Faden 32f verläuft vom Leiter 16f minimal beabstandet. Der Leiter 16f ist **entgegen** einer bezüglich einer Spulenmitte (nicht dargestellt) abgewandten Richtung 40f unbeweglich an einer Substrateinheit 18f befestigt. In der Gargerätevorrichtung 10g verläuft ein Faden 22g von einem Leiter 16g minimal beabstandet. Der Faden 32g verläuft mit einem Abstand zu einem Leiter 16g. Der Leiter 16g ist entlang einer bezüglich einer Spulenmitte (nicht dargestellt) abgewandten Richtung 40g unbeweglich an einer Substrateinheit 18g befestigt.

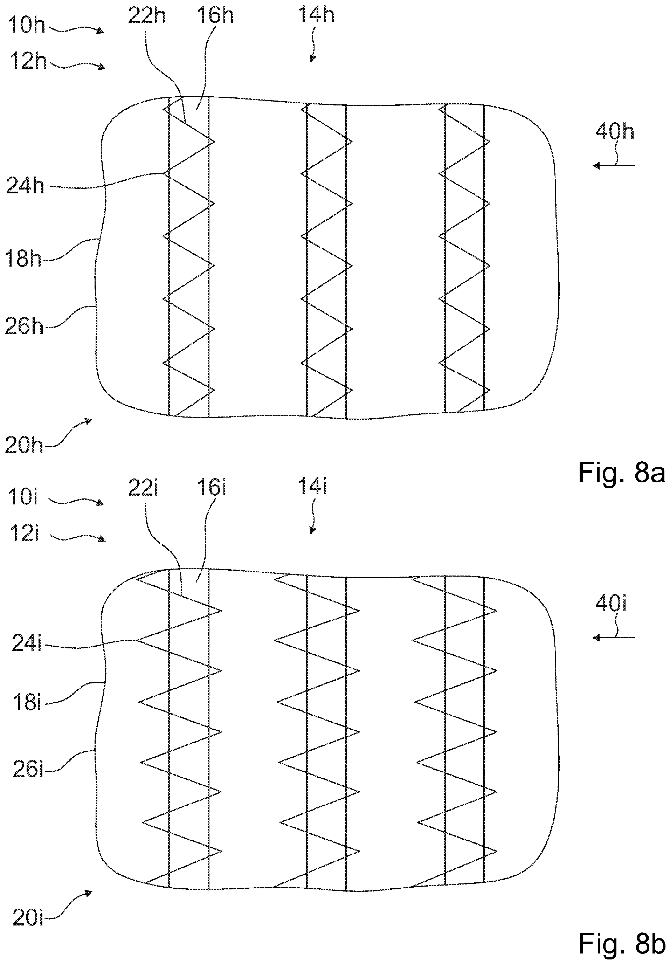

In Fig. 8a-b ist jeweils ein Teil von Gargerätevorrichtungen 10h, 10i dargestellt. Induktionsspulen 14h, 14i der Gargerätevorrichtungen 10h, 10i sind vollständig durch Fäden 22h, 22i an Substrateinheiten 18h, 18i genäht. In den Gargerätevorrichtungen 10h, 10i verläuft der Faden 22h, 22i jeweils in periodischen Abständen über einen Leiter 16h, 16i. Der Faden 22h, 22i verläuft jeweils in einem Zickzackmuster. Durchlassöffnungen 24h, 24i bilden jeweils Umkehrpunkte des Zickzackmusters. Die Fäden 22h, 22i sind jeweils gemäß einer Zigzag-Nähmethode durch die Durchlassöffnungen 24h, 24i geführt. Alternativ könnten die Fäden 22h, 22i jeweils abschnittsweise parallel zu den Leitern 16h, 16i laufen. In der Gargerätevorrichtung 10h ist der Leiter 16h entlang einer Haupterstreckungsebene der Induktionsspule 14h unbeweglich an der Substrateinheit 18h befestigt. Der Leiter 16h ist als ein Litzendraht ausgebildet. In der Gargerätevorrichtung 10i verläuft ein Teil der Durchlassöffnungen 24i mit einem Abstand vom Leiter 16i. Der Teil der Durchlassöffnungen 24i ist an einer entlang einer bezüglich einer Spulenmitte (nicht dargestellt) abgewandten Richtung 40i ausgerichteten Seite des Leiters 16i angeordnet. Der Leiter 16i ist **entgegen** der Richtung 40i unbeweglich an der Substrateinheit 18i befestigt. Die Gargerätevorrichtungen 10h, 10i weisen keine Abdeckelemente auf. Die die Fäden 22h, 22i aufweisenden Nähte vernähen die Induktionsspulen 14h, 14i jeweils mit einer der Substrateinheiten 18h, 18i.

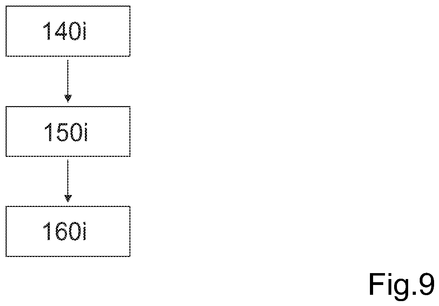

In Fig. 9 ist ein Verlaufsdiagramm eines Verfahrens zur Herstellung der Gargerätevorrichtung 10i dargestellt. In einem Positionierungsschritt 140i wird die Induktionsspule 14i in einem ungewickelten Zustand an der Substrateinheit 18i angeordnet.

In einem Stickschritt 150i wird gleichzeitig die Induktionsspule 14i gewickelt und der Faden 22i gemäß der Zigzag-Nähmethode durch die Durchlassöffnungen 24i geführt. Der Stickschritt 150i folgt hierbei auf den Positionierungsschritt 140i.

In einem Montageschritt 160i wird die Heizeinheit 12i am Innengehäuse (nicht dargestellt) montiert. Die Heizeinheit 12i wird an das Innengehäuse geschraubt. Alternativ könnte die Heizeinheit 12i auch an das Innengehäuse geklemmt und/oder genietet werden.

### Bezugszeichen

- 10: Gargerätevorrichtung
- 12: Heizeinheit
- 14: Induktionsspule
- 16: Leiter
- 18: Substrateinheit
- 20: Befestigungseinheit
- 22: Faden
- 24: Durchlassöffnung
- 26: Abdeckelement
- 28: Garraum
- 30: Gargerät
- 32: Faden
- 34: Spulenmitte
- 40: Richtung
- 42: Innengehäuse
- 44: Außengehäuse
- 46: Ofentür
- 48: Benutzerschnittstelle
- 50: Faden
- 52: Öffnung
- 54: Deckenwand
- 56: Bodenwand
- 100: Wicklungsschritt
- 110: Isolierungsschritt
- 120: Nähschritt
- 130: Montageschritt
- 140: Positionierungsschritt
- 150: Stickschritt
- 160: Montageschritt

## Patentansprüche

1. Induktionsofenvorrichtung (10a-i) mit zumindest einer Heizeinheit (12a-i), welche zumindest eine Induktionsspule (14a-i) mit wenigstens einem elektrischen Leiter (16a-i), zumindest eine Substrateinheit (18a-i) und zumindest eine Befestigungseinheit (20a-i) mit zumindest einem Befestigungselement (22a-i) aufweist, welche die Induktionsspule (14a-i) an der Substrateinheit (18a-i) befestigt, wobei die Substrateinheit (18a-i) zumindest eine Durchlassöffnung (24a-i) aufweist, durch welche zumindest das Befestigungselement (22a-i) geführt ist, **dadurch gekennzeichnet, dass** die Substrateinheit (18a-i) mattenartig ausgebildet ist.

2. Induktionsofenvorrichtung (10a-i) nach Anspruch 1, **dadurch gekennzeichnet, dass** die Substrateinheit (18a-i) zumindest ein Silikat aufweist.

3. Induktionsofenvorrichtung (10a-i) nach Anspruch 1 oder 2, **dadurch gekennzeichnet, dass** das Befestigungselement (22a-i) zumindest ein Silikat aufweist.

4. Induktionsofenvorrichtung (10a-i) nach einem der vorhergehenden Ansprüche,
**dadurch gekennzeichnet, dass** die Substrateinheit (18a-i) zu einer Befestigung der Induktionsspule (14a-i) zumindest teilweise durchstoßbar ist, wobei die Substrateinheit (18a-i) zumindest einen Teilbereich aufweist, welcher zumindest einen ersten Teilbereich der erste Seite der Substrateinheit (18a-i) und einen zweiten Teilbereich der zweite Seite der Substrateinheit (18a-i) umfasst, den ein Objekt zu einer Erzeugung und/oder Ausweitung der Durchlassöffnung (24a-i) durchstoßen kann, ohne umliegende weitere Teilbereiche der Substrateinheit (18a-i) zu beschädigen.

5. Induktionsofenvorrichtung (10a-i) nach einem der vorhergehenden Ansprüche,
**dadurch gekennzeichnet, dass** die Substrateinheit (18a-i) zumindest teilweise faserartig ist.

6. Induktionsofenvorrichtung (10a-i) nach Anspruch 5, **dadurch gekennzeichnet, dass** die Substrateinheit (18a-i) zumindest ein flächenförmiges textiles Gebilde aufweist.

7. Induktionsofenvorrichtung (10a-i) nach einem der vorhergehenden Ansprüche,
**dadurch gekennzeichnet, dass** das Befestigungselement (22a-i) als ein Faden (22a-i) ausgebildet und die Induktionsspule (14a-i) an der Substrateinheit (18a-i) mittels zumindest einer den Faden (22a-i) aufweisenden Naht befestigt ist.

8. Induktionsofenvorrichtung (10a-h) nach einem der vorhergehenden Ansprüche,
**dadurch gekennzeichnet, dass** die Substrateinheit (18a-h) zumindest teilweise aus Basalt besteht.

9. Induktionsofenvorrichtung (10i) nach einem der vorhergehenden Ansprüche,
**dadurch gekennzeichnet, dass** die Substrateinheit (18i) zumindest teilweise aus Glasfasern besteht.

10. Induktionsofenvorrichtung (10a-g) nach einem der vorhergehenden Ansprüche,
**dadurch gekennzeichnet, dass** die Befestigungseinheit (20a-g) zumindest ein Abdeckelement (26a-g) aufweist, welches auf einer der Substrateinheit (18a-g) gegenüberliegenden Seite der Induktionsspule (14a-g) angeordnet ist und auf dieser Seite eine Bewegung der Induktionsspule (14a-g) einschränkt.

11. Induktionsofenvorrichtung (10a-g) nach Anspruch 10, **dadurch gekennzeichnet, dass** das Abdeckelement (26a-g) zumindest ein Silikat aufweist.

12. Induktionsofen (30), mit zumindest einer Induktionsofenvorrichtung (10) nach einem der vorhergehenden Ansprüche.

13. Verfahren zur Herstellung einer Induktionsofenvorrichtung (10a-i), insbesondere nach einem der Ansprüche 1 bis 11, mit zumindest einer Heizeinheit (12a-i), welche zumindest eine Induktionsspule (14a-i) mit wenigstens einem elektrischen Leiter (16a-i) und zumindest eine Substrateinheit (18a-i) aufweist, wobei die Induktionsspule (14a-i) an der Substrateinheit (18a-i) befestigt wird, wobei zur Befestigung des Leiters (16a-i) durch die Substrateinheit (18a-i) ein Befestigungselement (22a-i) geführt wird, **dadurch gekennzeichnet, dass** die Substrateinheit (18a-i) mattenartig ausgebildet wird.

## Claims

1. Induction oven device (10a-i) with at least one heating unit (12a-i), which has at least one induction coil (14a-i) with at least one electrical conductor (16a-i), at least one substrate unit (18a-i) and at least one fastening unit (20a-i) with at least one fastening element (22a-i), which fastens the induction coil (14a-i) to the substrate unit (18a-i), wherein the substrate unit (18a-i) has at least one through-flow opening (24a-i), through which at least the fastening element (22a-i) is guided, **characterised in that** the substrate unit (18a-i) is embodied in a mat-like manner.

2. Induction oven device (10a-i) according to claim 1, **characterised in that** the substrate unit (18a-i) features at least one silicate.

3. Induction oven device (10a-i) according to claim 1 or 2, **characterised in that** the fastening element (22a-i) features at least one silicate.

4. Induction oven device (10a-i) according to one of the preceding claims, **characterised in that** the substrate unit (18a-i) can be pierced through, at least partially, in order to fasten the induction coil (14a-i), wherein the substrate unit (18a-i) has at least one subregion which comprises at least a first subregion of the first side of the substrate unit (18a-i) and a second subregion of the second side of the substrate unit (18a-i), which can be pierced through by an object in order to generate and/or widen the through-flow opening (24a-i) without damaging further surrounding subregions of the substrate unit (18a-i).

5. Induction oven device (10a-i) according to one of the preceding claims, **characterised in that** the substrate unit (18a-i) is at least partially fibrous.

6. Induction oven device (10a-i) according to claim 5, **characterised in that** the substrate unit (18a-i) has at least one textile structure with a flat shape.

7. Induction oven device (10a-i) according to one of the preceding claims, **characterised in that** the fastening element (22a-i) is embodied as a thread (22a-i) and the induction coil (14a-i) is fastened to the substrate unit (18a-i) by means of at least one seam which has the thread (22a-i).

8. Induction oven device (10a-h) according to one of the preceding claims, **characterised in that** the substrate unit (18a-h) at least partially consists of basalt.

9. Induction oven device (10i) according to one of the preceding claims, **characterised in that** the substrate unit (18i) at least partially consists of glass fibres.

10. Induction oven device (10a-g) according to one of the preceding claims, **characterised in that** the fastening unit (20a-g) has at least one cover element (26a-g), which is arranged on a side of the induction coil (14a-g) which lies opposite the substrate unit (18a-g) and restricts a movement of the induction coil (14a-g) on this side.

11. Induction oven device (10a-g) according to claim 10, **characterised in that** the cover element (26a-g) features at least one silicate.

12. Induction oven (30), with at least one induction oven device (10) according to one of the preceding claims.

13. Method for producing an induction oven device (10a-i), in particular according to one of claims 1 to 11, with at least one heating unit (12a-i), which has at least one induction coil (14a-i) with at least one electrical conductor (16a-i) and at least one substrate unit (18a-i), wherein the induction coil (14a-i) is fastened to the substrate unit (18a-i), wherein a fastening element (22a-i) is guided through the substrate unit (18a-i) in order to fasten the conductor (16a-i), **characterised in that** the substrate unit (18a-i) is embodied in a mat-like manner.

## Revendications

1. Dispositif pour four à induction (10a-i) comprenant au moins une unité de chauffage (12a-i), qui comprend au moins une bobine d'induction (14a-i) comportant au moins un conducteur électrique (16a-i), au moins un ensemble de substrat (18a-i) et au moins une unité de fixation (20a-i) comprenant au moins un élément de fixation (22ai), qui fixe la bobine d'induction (14a-i) sur l'ensemble de substrat (18a-i),
dans lequel l'ensemble de substrat (18a-i) comprend au moins un orifice de passage (24a-i), à travers lequel l'au moins un élément de fixation (22a-i) est guidé, **caractérisé en ce que** l'ensemble de substrat (16a-i) est réalisé sous forme de mat.

2. Dispositif pour four à induction (10a-i) selon la revendication 1, **caractérisé en ce que** l'ensemble de substrat (18a-i) comprend au moins un silicate.

3. Dispositif pour four à induction (10a-i) selon la revendication 1 ou 2, **caractérisé en ce que** l'élément de fixation (22a-i) comprend au moins un silicate.

4. Dispositif pour four à induction (10a-i) selon l'une des revendications précédentes, **caractérisé en ce que** l'ensemble de substrat (18a-i) peut être perforé au moins en partie pour une fixation de la bobine d'induction (14a-i),
dans lequel l'ensemble de substrat (18a-i) comprend au moins une zone partielle, qui comprend au moins une première zone partielle du premier côté de l'ensemble de substrat (18a-i) et une deuxième zone partielle du deuxième côté de l'ensemble de substrat (18a-i), qu'un objet pour produire et/ou élargir l'orifice de passage (24a-i) peut transpercer, sans endommager d'autres zones partielles environnantes de l'ensemble de substrat (18a-i).

5. Dispositif pour four à induction (10a-i) selon l'une des revendications précédentes, **caractérisé en ce que** l'ensemble de substrat (18a-i) est au moins en partie fibreux.

6. Dispositif pour four à induction (10a-i) selon la revendication 5, **caractérisé en ce que** l'ensemble de substrat (18a-i) comprend au moins une structure textile plane.

7. Dispositif pour four à induction (10a-i) selon l'une des revendications précédentes, **caractérisé en ce que** l'élément de fixation (22a-i) est configuré sous forme d'un fil (22a-i) et la bobine d'induction (14a-i) est fixée à l'ensemble de substrat (18a-i) au moyen d'au moins une couture comprenant le fil (22a-i).

8. Dispositif pour four à induction (10a-h) selon l'une des revendications précédentes, **caractérisé en ce que** l'ensemble de substrat (18a-h) est constitué au moins en partie de basalte.

9. Dispositif pour four à induction (10i) selon l'une des revendications précédentes, **caractérisé en ce que** l'ensemble de substrat (18i) est constitué au moins en partie de fibres de verre.

10. Dispositif pour four à induction (10a-g) selon l'une des revendications précédentes, **caractérisé en ce que** l'unité de fixation (20a-g) comprend au moins un élément de recouvrement (26a-g), qui est disposé sur un côté de la bobine d'induction (14a-g) opposé à l'ensemble de substrat (18a-g) et limite sur ce côté un déplacement de la bobine d'induction (14a-g).

11. Dispositif pour four à induction (10a-g) selon la revendication 10, **caractérisé en ce que** l'élément de recouvrement (26a-g) comprend au moins un silicate.

12. Four à induction (30) comprenant un dispositif pour four à induction (10) selon l'une des revendications précédentes.

13. Procédé de fabrication d'un dispositif pour four à induction (10a-i), en particulier selon l'une des revendications 1 à 11, comprenant au moins une unité de chauffage (12a-i), qui comprend au moins une bobine d'induction (14a-i) comportant au moins un conducteur électrique (16a-i) et au moins un ensemble de substrat (18a-i), dans lequel la bobine d'induction (14a-i) est fixée sur l'ensemble de substrat (18a-i), et un élément de fixation (22a-i) est guidé à travers l'ensemble de substrat (18a-i) pour fixer le conducteur (16a-i),
**caractérisé en ce que** l'ensemble de substrat (18a-i) est réalisé sous forme de mat.
